# EUROPÄISCHE PATENTSCHRIFT

(11) **EP 1 862 261 B1**
(45) Veröffentlichungstag und Bekanntmachung des Hinweises auf die Patenterteilung: **02.12.2015**
(21) Anmeldenummer: 07405157.4
(22) Anmeldetag: 01.06.2007
(51) Int. Cl.: B25B 27/14, B25F 3/00, F16B 2/24, E02D 17/20, E02D 29/02, F16B 15/00, F16B 15/08

(54) **Pressklaue zum Verbinden von Drahtgeflechten oder Drahtnetzen sowie eine Vorrichtung zum Verschliessen der Pressklauen**
Pressure grip for connecting wire mesh or wire gauze and device for closing the pressure grips
Mâchoire de presse destinée à la connexion de grilles métalliques ou de grillages tout comme un dispositif destiné à la fermeture de mâchoires de presse

(30) Priorität: 02.06.2006 CH 8912006
(43) Veröffentlichungstag der Anmeldung: 05.12.2007
(73) Patentinhaber: Fatzer AG Drahtseilfabrik, 8590 Romanshorn (CH)
(72) Erfinder: Flum, Daniel, 8598 Bottighofen TG (CH)
(74) Vertreter: Luchs, Willi

(56) Entgegenhaltungen:
- EP-A- 0 979 329
- GB-A- 2 246 595
- JP-A- 2001 315 069
- US-A- 3 840 947
- US-A- 4 476 616
- US-A- 5 217 049

## Beschreibung

Die Erfindung betrifft eine Pressklaue zum Verbinden von Drahtgeflechten oder Drahtnetzen, sowie eine Vorrichtung zum Verschliessen der Pressklauen.

Pressklauen werden beispielsweise zum Verbinden von Geflechtbahnen oder einzelnen Drahtnetzteilen verwendet. Sie bestehen aus einem korrosionsgeschützten, in der Regel verzinkten Draht und weisen jeweils zwei von einer gerundeten Basis wegragende, einen Öffnungswinkel einschliessende Schenkel auf, die an ihrem freien Ende mit je einem Haken versehen sind, wobei die beiden Haken gegeneinander gerichtet sind. Die Pressklauen werden aus einem Draht mit einem Durchmesser von 6 mm angefertigt.

Zum Verschliessen der Pressklauen wird eine Zange verwendet. Das manuelle Verschliessen der losen Pressklauen nach dem Einfädeln der jeweiligen Pressklaue ist zeitaufwendig. Zudem wird durch die Zange oft die Zinkschicht beschädigt, so dass kein optimaler Korrosionsschutz mehr gewährleistet ist. Nicht zuletzt sind die bisher verwendeten Pressklauen mit einem Durchmesser von 6 mm recht schwer.

Aus US-A-4 476 616 ist eine Pressklaue zum Verbinden von Drahtgeflechten oder Drahtnetzen bekannt. Diese kann mit einer Vorrichtung geschlossen werden. Sie bietet jedoch nicht die bestmöglichste Verbindung von zwei Drähten.

Aus GB-A-2 246 595 ist eine Klaue für ein Bohrloch bekannt, bei der die beiden Schenkel in zwei einen Winkel einschliessenden Ebenen liegen. Diese Klaue ist jedoch für eine andere Anwendung vorgesehen und eignet sich nicht für die Befestigung von zwei Drähten.

Die Druckschrift US-A-3,840,947 offenbart eine Behälterverbindung, bei welcher bei Ringen bei den beiden Schenkeln wie Doppelhaken gebildet sind, welche ein erstes und ein zweites Mal gebogen sind, so dass die Endpartien im gedrückten Zustand parallel zueinander bzw. zu den Sektionen angeordnet sind. Diese eignen sich daher nicht für eine Herstellung mit hochfestem Draht.

Die Druckschrift JP-A-2001315069 offenbart ein Werkzeug, bei dem unter Zuhilfenahme einer Bohrmaschine ein Bördeln vorgenommen werden kann. Es wird dabei aber ein Schliesshebel für das Schliessen der Zangenelemente benötigt, welcher aber ein umständliches Bördeln hervorruft.

Die Druckschrift US-A-5,217,049 beschreibt ein Versehen von Drahtwindungen bei Armierungseisen. Dabei wird mittels eines Elektromotors und entsprechenden Zangenelementen einer mit dieser gekoppelten Vorrichtung ein Umwickeln von Draht bei sich kreuzenden Armierungseisen bewirkt. Eine solche Vorrichtung eignet sich aber nicht für die Montage von Pressklauen.

Der vorliegenden Erfindung liegt die Aufgabe zugrunde, Pressklauen sowie eine Vorrichtung zum Verschliessen dieser Pressklauen zu schaffen, mit denen die Montage wesentlich vereinfacht wird.

Diese Aufgabe wird erfindungsgemäss durch eine Pressklaue mit den Merkmalen des Anspruches 1 sowie einer Vorrichtung zum Verschliessen dieser Pressklauen nach den Merkmalen des Anspruches 7 gelöst.

Weitere bevorzugte Ausgestaltungen der erfindungsgemässen Pressklaue bzw. der erfindungsgemässen Vorrichtung bilden den Gegenstand der abhängigen Ansprüche.

Erfindungsgemäss bestehen die Pressklauen aus hochfestem Stahldraht, die eine kraftschlüssige Verbindung von Drahtgeflechten oder Drahtnetzen ebenfalls aus hochfestem Stahldraht ermöglichen. Derartige Pressklauen sind im Vergleich zu herkömmlichen Pressklauen im Gewicht wesentlich reduziert. Die beiden Schenkel liegen in zwei einen Winkel einschliessenden Ebenen, und ihre Haken können mit der erfindungsgemässen Vorrichtung beim Verschliessen aneinander vorbei bewegt werden, so dass sie im geschlossenen Zustand möglichst aneinander liegen.

Die erfindungsgemässe Vorrichtung zum Verschliessen von Pressklauen erlaubt eine einfache Montage, bei der nicht nur der Kraftaufwand wie bei der Verwendung einer Zange wegfallt, sondern auch das Abplatzen des Korrosionsschutzes beim Verschliessen weitgehend vermieden wird.
Mit dem vorzugsweise vorhandenen Magazin für Pressklauen wird auch das Problem, dass sich die losen Pressklauen ineinander verhaken, gelöst, wodurch die Montage noch zusätzlich vereinfacht wird.

Die Erfindung wird nachfolgend anhand der Zeichnung näher erläutert.
Es zeigen:
- Fig. 1a, 1b: eine erfindungsgemässe Pressklaue zum Verbinden von Geflechtbahnen, in einem ursprünglichen Zustand;
- Fig. 2a, 2b, 2c: die Pressklaue im geschlossenen Zustand;
- Fig. 3: schematisch eine Böschungssicherung mit zwei miteinander verbundenen Geflechtbahnen;
- Fig. 4: eine erfindungsgemässe Vorrichtung zum Verschliessen von Pressklauen in Seitenansicht und teilweise im Schnitt, in einer Ausgangsstellung;
- Fig. 5: in Seitenansicht die Vorrichtung nach Fig. 4 beim Einsetzen einer Pressklaue In eine Klemmvorrichtung;
- Fig. 6: einen an eine Bohrmaschine anschliessbaren Aufsatzteil der Vorrichtung nach Fig. 4 bzw. 5 in perspektivischer Darstellung, mit einem Magazin, einer PressklauenZuführvorrichtung und der Klemmvorrichtung;
- Fig. 7: den Aufsatzteil nach Fig. 6 in Seitenansicht und teilweise im Schnitt, in der der Fig. 4 entsprechenden Ausgangsstellung;
- Fig. 8: den Aufsatzteil nach Fig. 6 in Seitenansicht und teilweise im Schnitt, in der der Fig. 5 entsprechenden Stellung; und
- Fig. 9 bis 14: die Pressklauen-Klemmvorrichtung in Draufsicht, in sechs nacheinander folgenden Stellungen.

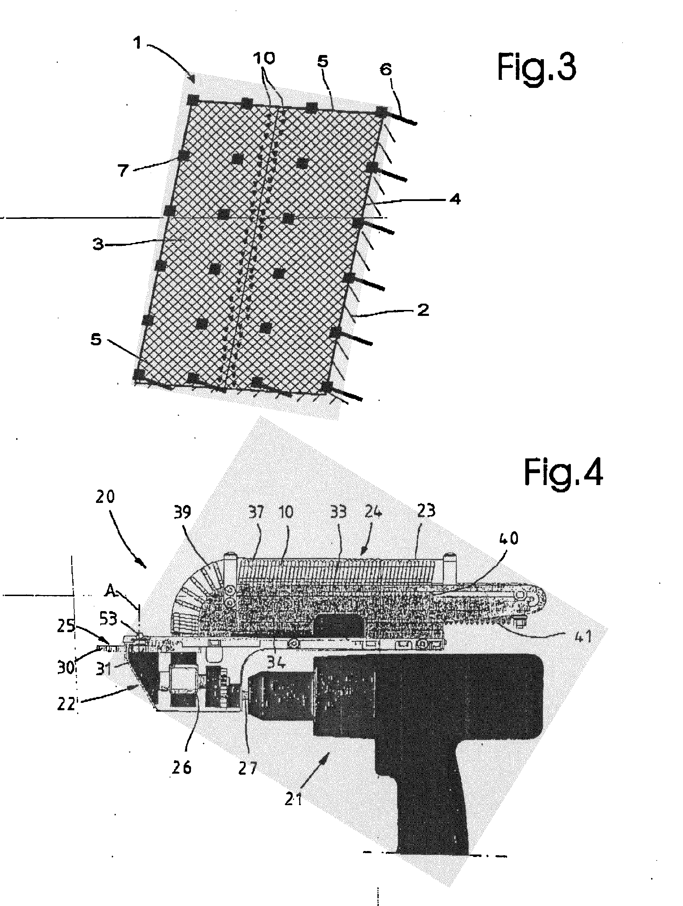

Fig. 3 zeigt rein schematisch eine Böschungs- und Lockergesteinsicherung 1 einer beispielsweise an einem steilen Abhang befindlichen Böschung 2. Die Böschungs- und Lockergesteinsicherung 1 besteht aus zwei über einen gewünschten Böschungsbereich ausgelegten Drahtgeflechtbahnen 3, 4, die In einer weiter unten beschriebenen, erfindungsgemässen Weise mittels einer Anzahl von Pressklauen 10 miteinander verbunden sind. Bei den Drahtgeflechtbahnen 3, 4 handelt es sich vorzugsweise um Geflechte aus einzelnen hochfesten Stahldrähten, wie sie beispielsweise aus der EP-B-0 979 329 bekannt sind. Am oberen und unteren Ende des Geflechtes sind Seile 5 vorgesehen, mittels welchen das Geflecht mit einer Zugkraft gestreckt ist. Die am Boden ausgelegten Drahtgeflechtbahnen 3, 4 werden mittels in den Boden versenkten Befestigungselementen 6 (an sich bekannten Boden- oder Felsnägeln) befestigt und das Geflecht durch Krallplatten 7 oder ähnlichem auf die Erdoberfläche gedruckt.

Erfindungsgemäss werden die Pressklauen 10 aus demselben hochfesten Stahl gefertigt, wie die Drahtgeflechtbahnen 3, 4 (Nennfestigkeit vorzugsweise mindestens 1770 NImm²). Auch der Korrosionsschutz ist identisch mit demjenigen des hochfesten Stahidrahtgeflechtes (z.B. Zn/Al-Verzinkung, min. 150 g/m²). Weisen die Stahldrähte der miteinander zu verbindenden Geflechte einen Durchmesser von 3 mm auf, so werden auch Pressklauen mit einem Drahtdurchmesser von 3 mm verwendet.

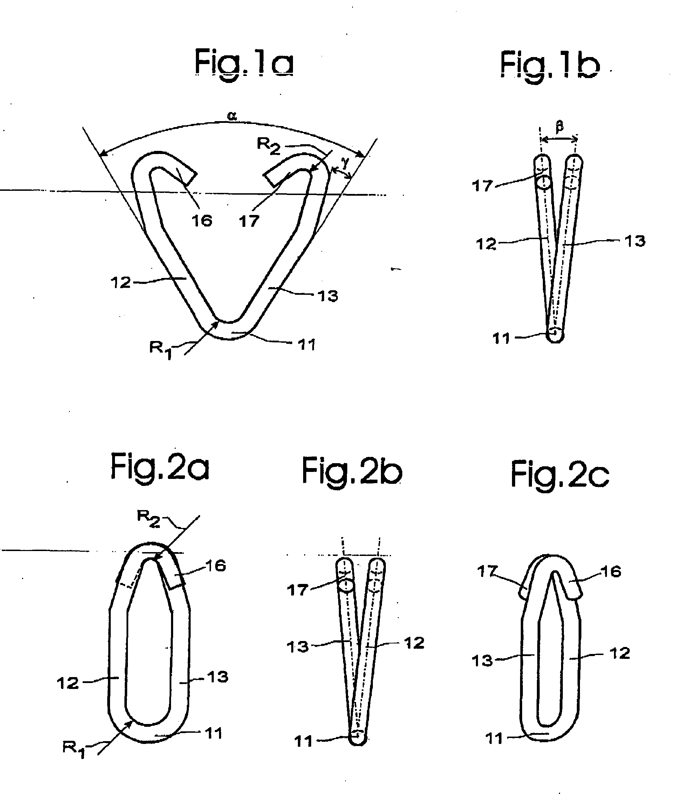

Die Pressklauen 10 besitzen im ursprünglichen Zustand vorzugsweise eine aus Fig. 1a und 1b ersichtliche Form, wobei die Geometrie so gewählt ist, dass jeweils zwei Drähte der miteinander zu verbindenden Maschen von benachbarten Geflechtbahnen 3, 4 durch direktes Einfahren ohne Dreh- oder Einfädelbewegung einfach gefasst werden können. Die Pressklaue 10 weist jeweils zwei von einer gerundeten Basis 11 wegragende, miteinander einen Öffnungswinkel α von vorzugsweise 60° einschliessende Schenkel 12, 13 auf, die an Ihrem freien Ende mit je einem Haken 16, 17 versehen sind. Die beiden Haken 16, 17 sind gegeneinander gerichtet. In einer bevorzugten Weise sind die beiden Schenkel 12, 13 unmittelbar vor dem Haken 16 bzw. 17 noch in Richtung zueinander um einen Winkel γ von ca. 14° abgewinkelt, so dass sie in diesem Bereich einen Öffnungswinkel von ca. 32° einschliessen.

Der Radius R₁ der Basisinnenseite sowie der Radius R₂ der Hakeninnenseite sind so gewählt, dass die zwei Drähte der miteinander zu verbindenden Maschen von benachbarten Geflechtbahnen 3, 4, beim Verschliessen der Pressklaue 10 gefasst werden können. Dabei beträgt der Radius R₁ der Basisinnenseite mit Vorteil ca. 4 mm, der Radius R₂ der Hakeninnenseite ca. 1,25 mm. Der Radius R₂ auf der Hakeninnenseite ist entscheidend für eine kraftschlüssige Verbindung der Geflechtbahnen 3, 4. Beträgt dieser ca. 1,25 mm, so kann bei Belastung Ober das Geflecht ausreichend Reibung mobilisiert werden, um ein Aufgehen der Haken 16, 17 zu verhindern.

Die beiden Klauenschenkel 12, 13 liegen in zwei miteinander einen Winkel β von ca. 8° einschliessenden Ebenen, so dass die beiden Haken 16, 17 beim Verschliessen der Presseklaue 10 aneinander vorbei bewegt werden können und im geschlossenen Zustand möglichst aneinander liegen (vgl. Fig. 3c).

Das Verschliessen der Pressklauen 10 in die aus Fig. 2a, 2b und 2c ersichtliche Form erfolgt mittels einer erfindungsgemässen Vorrichtung 20, deren ein Ausführungsbeispiel in Fig. 4 bis 14 dargestellt ist und im folgenden näher beschrieben wird.

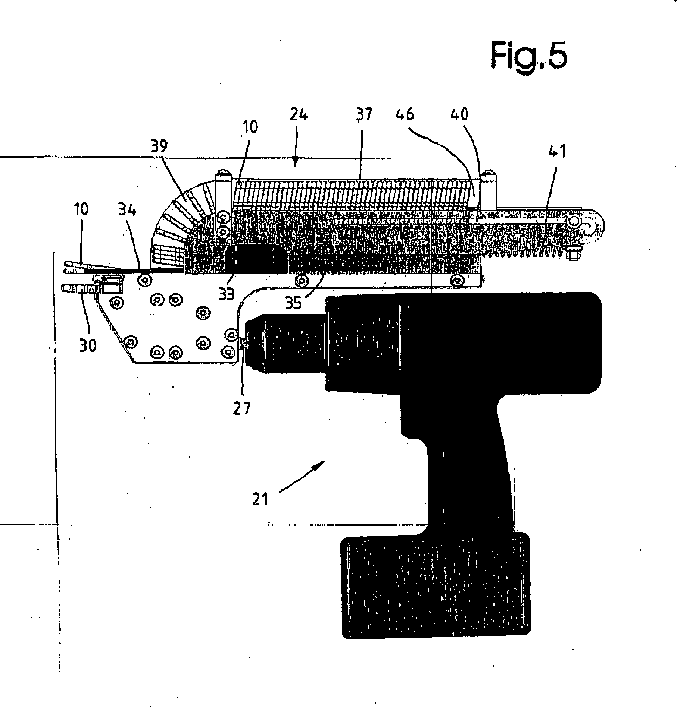

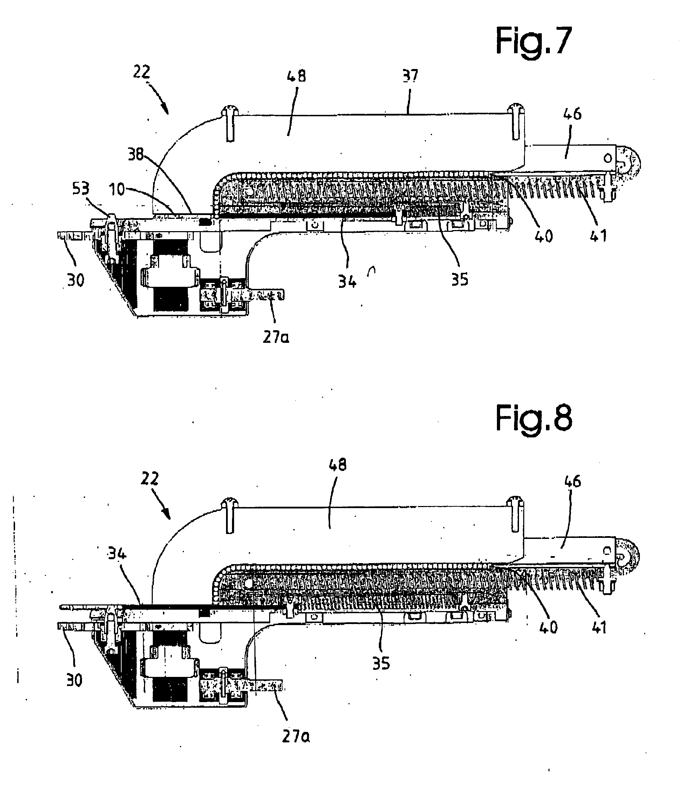

Gemäss Fig. 4 umfasst die erfindungsgemässe Vorrichtung 20 einen Antriebsteil, den mit Vorteil eine handelsübliche Bohrmaschine 21 bildet, sowie einen auf die Bohrmaschine 21 aufsetzbaren Aufsatzteil 22, der auch in Fig. 5, 6, 7 und 8 dargestellt ist, und der ein Magazin 23 mit einer Anzahl von Pressklauen 10, eine Klemmvorrichtung 25 zum Verschliessen der Pressklauen 10 sowie eine Zuführvorrichtung 24 zum Zuführen der Pressklauen 10 zu der Klemmvorrichtung 25 aufweist. Die Klemmvorrichtung 25 steht über ein im Aufsatzteil 22 untergebrachtes Untersetzungsgetriebe 26 mit der Bohrmaschine 21 bzw. mit ihrer Spindel 27 in Antriebsverbindung und weist die einzelnen Pressklauen 10 verschliessende Klemmelemente 30, 31 auf, deren genaue Ausbildung und Funktion noch weiter unten näher erklärt wird. Die Klemmelemente 30, 31 sind parallel zu einer mit der Bohrmaschine-Spindel 27 verbindbaren Antriebsachse 27a (Fig. 7 und 8) angeordnet.

Gemäss Fig 5 (auch Fig. 1) umfasst die Zuführvorrichtung 24 einen in einer Zuführebene beweglichen Stössel 34, der manuell über ein Betätigungselement 33 betätigbar ist und mit einer Feder 35 (Fig. 5, 7 und 8) zusammenwirkt. Die Zuführebene ist parallel zur Antriebsachse 27a angeordnet. Ober das Betätigungselement 33 kann der Stössel 34 entgegen der Kraft der Feder 35 aus der in Fig. 4 und 7 gezeigten Ausgangsstellung in die aus Fig. 5 und 8 ersichtliche Stellung bewegt werden und dabei eine an einem unmittelbar oberhalb der Zuführebene liegenden Magazinausgang 38 positionierte Pressklaue 10 mitnehmen und der Klemmvorrichtung 25 zuführen. Danach wird der Stössel 34 durch die Kraft der Feder 35 wieder zurückbewegt.

Das Magazin 23 weist einen zu der Zuführebene parallelen und von letzterer beabstandeten Teil 37 auf, in welchem die Pressklauen 10 aneinandergereiht angeordnet und dabei annähernd senkrecht zu der Zuführebene gerichtet sind, und an welchen sich ein Umlenkteil 39 anschliesst, durch welchen die Pressklauen. 10 zu dem unmittelbar oberhalb der Zuführebene liegenden Magazinausgang 38 geführt und in die Zufuhrposition ausgerichtet werden. In Richtung zum Magazinausgang 38 hin gedrängt werden die Pressklauen 10 durch ein in Längsnuten 37' mittels Bolzen 40' geführten Verstellelement 40, das mit einer Feder 41 zusammenwirkt. Beim dargestellten Ausführungsbeispiel ist die Feder 41 als eine Zugfeder ausgebildet und unterhalb des zur ZufQhrebene parallelen Magazinteiles 37 angeordnet. Die Längsnuten 37' sind am hinteren Ende mit einer Rundung versehen, um das Verstellelement 40 in eine Ladeposition zurückziehen zu können.

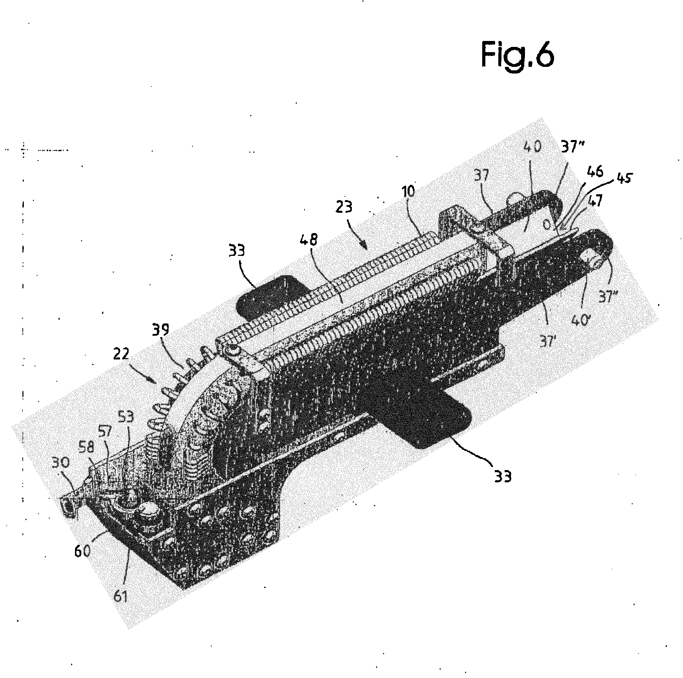

Wie insbesondere aus Fig. 6 ersichtlich, weist das Magazin 23 einen im Querschnitt der Aussenform von Pressklauen 10 entsprechenden Führungskanal auf. Eine V-Form bildende Seitenwände 46, 47 des Verstellelementes 40 schliessen den dem Öffnungswinkel der Klauenschenkel 12, 13 entsprechenden Winkel α ein. Ferner ist das Magazin 23 mit einem von oben in den Führungskanal, zwischen die Haken 16, 17 der Pressklauen 10, hineinragenden Halteteil 48 ausgestattet, der die Pressklauen 10 gegen Herausfallen aus dem Magazin 23 sichert.

Die sich unmittelbar am Magazinausgang 38 befindende Pressklaue 10 wird bis zum Auftreffen des Stössels 34 beispielsweise mittels eines Magnetes in Ihrer Position gehalten, so dass auch die weiteren Pressklauen 10 gegen vorzeitiges Herausfallen aus dem Magazin 23 gesichert sind.

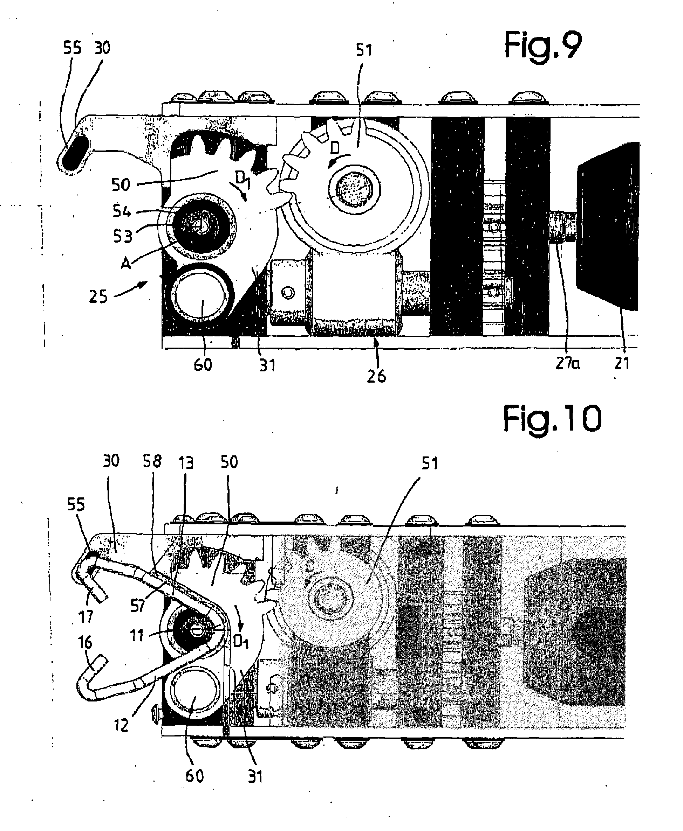

Im folgenden wird nun die **Klemmvorrichtung** 25 näher beschrieben und ihre Funktion anhand der Fig. 9 bis 14 erklärt. Die eine solche jeweilige Pressklaue 10 verschliessenden Klemmelemente sind durch eine ortsfeste Klemmbacke 30 einerseits und ein um eine Achse A (Fig. 4 und 9) schwenkbar gelagertes Mitnahmeelement 31 anderseits gebildet. Das Mitnahmeelement 31 ist gemäss Fig. 9 bis 14 mit einem Zahnsegment 50 versehen und über diesen in Zusammenwirkung mit einem über das Untersetzungsgetriebe 26 in Drehrichtung D antreibbaren Zahn-Gegensegment 51 in Drehrichtung D₁ verschwenkbar. Koaxial zur Schwenkachse A ist ein kegelförmiger, sich nach unten im Durchmesser erweiternder Zapfen 53 angeordnet. Die zu verschliessende Pressklaue 10 wird mittels des Stössels 34 mit ihrer Basisinnenseite bis zu dem Zapfen 53 bewegt und auf einen zum Zapfen 53 koaxialen, ringförmigen Magnet 54 aufgesetzt, wobei auch das Hakenende des einen Klauenschenkels 13 auf einem weiteren, der ortsfesten Klemmbacke 30 zugeordneten Magnet 55 zur Auflage kommt und die Pressklaue 10 positioniert (vgl. Fig. 10). Der Klauenschenkel 13 wird seitlich auf einer der ortsfesten Klemmbacke 30 zugeordneten Abstützfläche 57 abgestützt, die mit einer dem Durchmesser der Pressklaue 10 entsprechenden rillenförmigen Vertiefung 58 versehen ist.

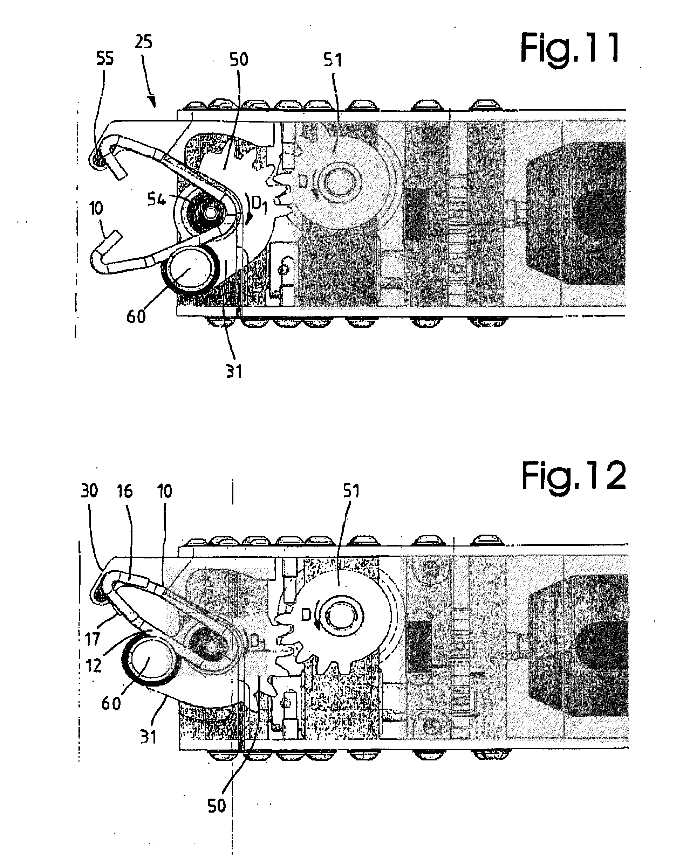

Am schwenkbaren Mitnahmeelement 31 ist ein zylindrischer Mitnahmeteil 60 mit einer dem Durchmesser der Pressklaue 10 entsprechenden Umfangsnut 61 (Fig. 6) angebracht, der bei der über die Zahnsegmente 51, 50 bewerkstelligten Verschwenkung des Mitnahmeelementes 31 in Drehrichtung D₁ entsprechend der Fig. 11 den Schenkel 12 der in der Klemmvorrichtung 25 positionierten Pressklaue 10 erfasst und gegen den abgestützten anderen Schenkel 13 drückt. Die rillenförmige Vertiefung 58 sowie die Umfangsnut 61 unterstützen die Wirkung der Magnete 54, 55 bzw. verhindern ein "Aufspringen" der Pressklaue 10 bei ihrem Verschliessen.

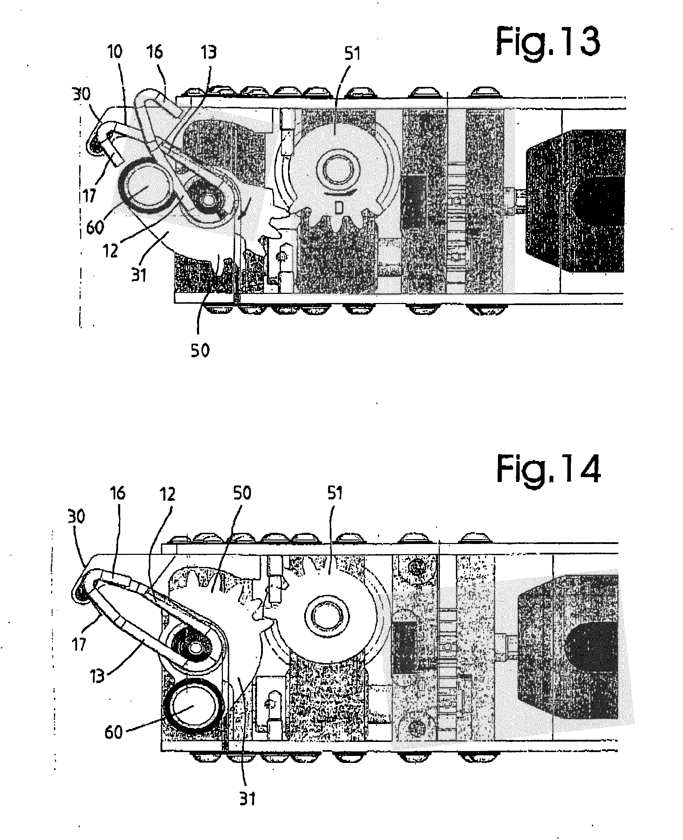

Wie der Fig. 12 und 13 zu entnehmen ist, werden nun unter Zusammenwirkung der beiden Zahnsegmente 50, 51 die beiden Klauenschenkel 12, 13 mit ihren Haken 16, 17 aneinander vorbei bewegt und bis in die aus Fig. 13 ersichtliche Position überdrückt. Sobald der letzte Zahn des Zahnsegmentes 51 aus dem Eingriff mit dem angetriebenen Zahn-Gegensegment 50 gerät, entspannt sich die Pressklaue 10 und nimmt die in Fig. 14 dargestellte Endform an, wobei das Mitnahmeelement 31 - unterstützt durch eine zur Achse A koaxiale Torsionsfeder (aus der Zeichnung nicht ersichtlich) - in die Ausgangsstellung nach Fig. 9 zurück geschwenkt wird, in der es zum Verschliessen einer weiteren Pressklaue 10 bereit steht.

Die verschlossene Pressklaue 10 bleibt selbstverständlich im Geflecht (in Fig. 10 bis 14 sind die zu verbindenden Maschen nicht dargestellt). Die Bedienungsperson kann über das Betätigungselement 33 eine weitere Pressklaue 10 vom Magazin 23 der frei gewordenen Klemmvorrichtung 25 zuführen, dann die zu verbindenden Drähte fassen, mit der Vorrichtung 20 einfahren und den Antrieb einschalten, um einen weiteren Schliessvorgang durchzuführen.

Die erfindungsgemässe Vorrichtung 20 könnte aber auch lediglich z.B. die vorstehend beschriebene oder eine ähnliche Klemmvorrichtung 25 umfassen, in die man die Pressklauen 10 von Hand einlegen würde. Um der Gefahr vorzubeugen, dass sich lose Patronen miteinander verhaken, was die Montage mühsamer macht, könnte auch ein separates Magazin verwendet werden, das die Bedienungsperson beispielsweise am Gurt tragen könnte.

Die Verwendung der erfindungsgemässen Pressklauen 10 sowie der erfindungsgemässen Vorrichtung 20 zum Verschliessen derselben ist durchaus nicht nur auf die Verbindung von Geflechtbahnen bei Böschungssicherungen eingeschränkt. Die Pressklauen sowie die Vorrichtung können beispielsweise auch bei Drahtnetzen Verwendung finden, wie z.B. bei Auffangnetzen für Steinschlag- und Lawinenverbauungen, die aus ineinandergreifenden Elementen bestehen.

Die erfindungsgemässe Vorrichtung zum Verschliessen von Pressklauen erlaubt eine einfache Montage, bei der nicht nur der Kraftaufwand wie bei der Verwendung einer Zange wegfällt, sondern auch das Abplatzen des Korrosionsschutzes beim Verschliessen weitgehend vermieden wird. Mit der bevorzugten Verwendung eines Magazins - separat oder als Teil der Vorrichtung - wird auch das Problem des Verhakens von losen Pressklauen gelöst.

Mit der Vorrichtung können erfindungsgemäss auch Pressklauen aus hochfestem Stahldraht verschlossen werden, die eine kraftschlüssige Verbindung von Drahtgeflechten oder Drahtnetzen ebenfalls aus hochfestem Stahldraht ermöglichen. Derartige Pressklauen sind im Vergleich zu herkömmlichen Pressklauen im Gewicht wesentlich reduziert.

## Patentansprüche

1. Pressklaue zum Verbinden von Drahtgeflechten oder Drahtnetzen, die zwei von einer gerundeten Basis (11) wegragende Schenkel (12, 13) aufweist, die an ihrem freien Ende mit je einem Haken (16, 17) versehen sind, wobei die beiden Haken gegeneinander gerichtet sind, und die Schenkel (12, 13) in zwei einen Winkel (β) einschliessenden Ebenen liegen, so dass die beiden Haken (16, 17) beim Verschliessen der Pressklaue aneinander vorbei bewegbar sind, **dadurch gekennzeichnet, dass**
es sich beim korrosionsgeschützten Draht um einen hochfesten Stahldraht handelt, bei welchem die Schenkel (12, 13) mit ihren Haken (16, 17) vor dem Annehmen der Endform aneinander vorbei in eine überdrückte Position bewegt sind, und die beiden Haken (16, 17) in der Endform übereinanderliegen und je einen gleichen sich überdeckenden Radius (R2) an der Hakeninnenseite bilden, und die Pressklaue für Drahtgeflechte bzw. Drahtnetze aus hochfestem Stahl für Böschungssicherungen oder für Auffangnetze für Steinschlag- oder Lawinenverbauungen verwendbar ist.

2. Pressklaue nach Anspruch 1, **dadurch gekennzeichnet, dass** der Drahtdurchmesser 3 mm beträgt und der Öffnungswinkel (α), der Radius (R₁) der Basisinnenseite sowie der Radius (R₂) der Hakeninnenseite so gewählt sind, dass jeweils zwei Drähte der miteinander zu verbindenden Maschen von Drahtgeflechten oder Drahtnetzen mit einem definierten Durchmesser beim Verschliessen der Pressklaue (10) fassbar sind.

3. Pressklaue nach Anspruch 2, **dadurch gekennzeichnet, dass** der Radius (R2) der Hakeninnenseite kleiner als der Drahtdurchmesser der Pressklaue und überdies gleich oder kleiner als der Radius des Drahtes der zu verbindenden Maschen beträgt.

4. Pressklaue nach einem der Ansprüche 1 bis 3, **dadurch gekennzeichnet, dass** die beiden Schenkel (12, 13) in zwei miteinander einen Winkel von ca. 8° einschliessenden Ebenen liegen.

5. Pressklaue nach einem der Ansprüche 1 bis 4, **dadurch gekennzeichnet, dass** es sich beim verwendeten Draht um den gleichen hochfesten Stahldraht handelt wie bei den miteinander zu verbindenden Drahtgeflechten oder Drahtnetzen, wobei seine Nennfestigkeit mindestens ca. 1770 N/mm² beträgt.

6. Vorrichtung zum Verschliessen von Pressklauen (10) für Drahtgeflechte oder Drahtnetze nach einem der Ansprüche 1 bis 5, **gekennzeichnet durch**
eine mit einem Antrieb wirkverbundene und Klemmelemente (30, 31) zum Verschliessen einzelner Pressklauen (10) aufweisende Klemmvorrichtung (25), in der die Pressklauen (10) vor dem Verschliessen einzeln positionierbar sind, wobei die Klemmvorrichtung (25) einem an eine handelsübliche Bohrmaschine (21) aufsetzbaren Aufsatzteil (22) zugeordnet ist, wobei zumindest eines der Klemmelemente (30, 31) über ein Untersetzungsgetriebe (26) von der Bohrmaschine-Spindel (27) antreibbar ist, wobei die Klemmelemente (30, 31) **durch** eine ortsfeste Klemmbacke (30) einerseits und ein schwenkbar gelagertes Mitnahmeelement (31) anderseits gebildet sind, wobei das Mitnahmeelement (31) mit einem Zahnsegment (50) versehen und über diesen in Zusammenwirkung mit einem über das Untersetzungsgetriebe (26) antreibbaren Zahn-Gegensegment (51) in einer das Verschliessen der in der Klemmvorrichtung (25) positionierten Pressklaue (10) bewirkenden Drehrichtung (D₁) verschwenkbar ist, und wobei unter Zusammenwirkung der beiden Zahnsegmente (50, 51) die beiden Schenkel (12, 13) der Pressklaue (10) mit ihren Haken (16, 17) aneinander vorbei bewegt und bis in eine Position überdrückt werden.

7. Vorrichtung nach Anspruch 6, **dadurch gekennzeichnet, dass** das Mitnahmeelement (31) nach dem Beenden des Zahneingriffes der beiden Zahnsegmente (50, 51) durch die Elastizität der Pressklaue (10) - unterstützt durch eine zusätzliche Feder - in eine Ausgangsstellung zurückverschwenkbar ist.

8. Vorrichtung nach Anspruch 6 oder 7, **dadurch gekennzeichnet, dass** die jeweilige Pressklaue (10) - mit ihrer Basisinnenseite einen zur Schwenkachse (A) des Mitnahmeelementes (31) koaxialen Zapfen (53) umschliessend - durch Aufliegen auf einem zum Zapfen (53) koaxialen Ringmagnet (54) einerseits und einem der ortsfesten Klemmbacke (30) zugeordneten weiteren Magnet (55) anderseits positionierbar ist.

9. Vorrichtung nach einem der Ansprüche 6 bis 8, **gekennzeichnet durch** ein Magazin (23) für eine Anzahl von Pressklauen (10), die mittels einer Zuführvorrichtung (24) aus dem Magazin (23) der Klemmvorrichtung (25) einzeln zuführbar sind.

10. Vorrichtung nach Anspruch 9, **dadurch gekennzeichnet, dass** die Zuführvorrichtung (24) einen manuell betätigbaren, mit einer Feder (35) zusammenwirkenden und die jeweilige Pressklaue (10) an einem Magazinausgang (38) mitnehmenden Stössel (34) aufweist.

11. Vorrichtung nach Anspruch 10, **dadurch gekennzeichnet, dass** die Pressklauen (10) im Magazin (23) aneinandergereiht angeordnet und unter Einwirkung einer Feder (41) zum Magazinausgang (38) bewegbar sind.

12. Vorrichtung nach einem der Ansprüche 9 bis 11, **dadurch gekennzeichnet, dass** das Magazin (23) sowie die Zuführvorrichtung (24) einen Teil des auf die Bohrmaschine (21) aufsetzbaren Aufsatzteiles (22) bilden, wobei die jeweilige Pressklaue (10) mittels der Zuführvorrichtung (24) in einer Zuführebene der Klemmvorrichtung (25) zuführbar ist, die parallel zu einer mit der Bohrmaschine-Spindel (27) verbindbaren Antriebsachse (27a) ist.

13. Vorrichtung nach Anspruch 12, **dadurch gekennzeichnet, dass** das Magazin (23) einen zu der Zuführebene parallelen und von dieser beabstandeten Teil (37) aufweist, an den sich ein Umlenkteil (39) anschliesst, durch welchen die Pressklauen (10) zu dem unmittelbar oberhalb der Zuführebene liegenden Magazinausgang (38) geführt und in die Zuführposition gebracht werden.

14. Vorrichtung nach Anspruch 13, **dadurch gekennzeichnet, dass** die sich unmittelbar am Magazinausgang (38) befindende Pressklaue (10) bis zum Auftreffen des Stössels (34) durch einen Magnet gehalten und somit die weiteren Pressklauen (10) gegen Herausfallen aus dem Magazin (23) gesichert sind.

15. Vorrichtung nach einem der Ansprüche 9 bis 14, **dadurch gekennzeichnet, dass** das Magazin (23) einen im Querschnitt der Aussenform von Pressklauen (10) entsprechenden Führungskanal (45) sowie einen die Pressklauen (10) im Führungskanal (45) gegen Herausfallen sichernden Halteteil (48) aufweist.

16. Vorrichtung nach Anspruch 15, **dadurch gekennzeichnet, dass** der Führungskanal (45) zwei einen Winkel (α) einschliessende Seitenwände (46, 47) aufweist, wobei der Winkel (α) einem Öffnungswinkel der Pressklauen (10) im ursprünglichen Zustand entspricht, und der Halteteil (48) zentral zwischen die Seitenwände (46, 47) des Führungskanals (45) und zwischen hakenförmige Enden (16, 17) der Pressklauen (10) hineinragt.

## Claims

1. Compression claw for a connection of wire meshes or wire nets, which consists of two legs (12, 13) projecting away from a rounded base (11), which are provided on their free end with each a hook (16, 17), the two hooks being oriented towards each other, the legs (12, 13) lie in two planes enclosing an angle (β), such that both hooks (16, 17) can move past each other when the compression claw closes, **characterised in that**
there is with the corrosion-resistant wire a high-strength steel wire, in which the legs (12, 13) with their hooks (16, 17) are moved past each other before receiving the final form in a pressed over position, and the both hooks (16, 17) superpose in the final shape and each have a same overlapping radius (R2) forming on the hook inside, and the compression claw for wire meshes or wire nets made of high strength steel used for surface soils or for safety nets for rockfall or avalanche.

2. Compression claw according to claim 1, **characterised in that** the diameter of the wire amounts 3 mm and the apex angle (α), the radius (R₁) of the base interior and the radius (R₂) of the hook interior are selected such that in each case two wires of the meshing of the wire meshes or wire nets to be connected together of a defined diameter, can be grasped when the compression claw (10) closes.

3. Compression claw according to claim 2, **characterised in that** the radius (R₂) of the hook interior is smaller than the wire diameter of the compression claw and moreover is the same as or smaller than the radius of the wire of the meshes to be connected.

4. Compression claw according to any one of claims 1 to 3, **characterised in that** both legs (12, 13) lie in two planes enclosing an angle of approximately 8° with each other.

5. Compression claw according to any one of claims 1 to 4, **characterised in that** the wire used is the same heavy-duty steel wire as in the wire meshes or wire nets to be connected together, while its nominal tensile strength amounts at least approximately 1770 N/mm².

6. Device for closing compression claws (10) for wire meshes or wire nets according to any one of claims 1 to 5, **characterised by**
a clamping device (25) functionally linked with a drive and clamp elements (30, 31) for the closure of individual compression claws (10), in which the compression claws (10) can be individually positioned before closure in which the clamping device (25) is assigned to a receiving part (22) which can be attached to a commercially available drill (21), while at least one of the clamp elements (30, 31) can be driven by the drill spindle (27) via a step-down gear (26), in which the clamp elements (30, 31) are formed, firstly by a stationary clamping jaw (30) and secondly by a pivotable carrier element (31), whereby the carrier element (31) being provided with a toothed segment (50) via which, in co-operation with a toothed counter-segment (51) drivable by the step-down gear (26), and can be pivoted in a direction of rotation (D₁) effecting the closure of the compression claw (10) positioned in the clamping device (25), and whereby under co-operation of the both toothed segments (50, 51) the both legs (12, 13) of the compression claw (10) with its hooks (16, 17) are moved past each other and pressed over into a position.

7. Device according to claim 6, **characterised in that** the carrier element (31) can be pivoted back into an initial position after the completion of the toothed engagement of the two toothed segments (50, 51) by the elasticity of the compression claw (10), supported by an additional spring.

8. Device according to claim 6 or 7, **characterised in that** the respective compression claw (10) - with its base interior enclosing a peg (53) coaxial with the swivelling axis (A) of the carrier element (31) - is positioned by firstly resting on a ring magnet (54) coaxial to the peg (53) and secondly on a further magnet (55) assigned to the stationary clamping jaw (30).

9. Device according to any one of claims 6 to 8, **characterised by** a magazine (23) for a number of compression claws (10), which can be fed individually out of the magazine (23) of the clamping device (25) by means of a feed device (24).

10. Device according to claim 9, **characterised in that** the feed device (24) has a manually operable ram (34) co-operating with a spring (35) and carrying the respective compression claw (10) to a magazine outlet (38).

11. Device according to claim 10, **characterised in that** the compression claws (10) are arranged in alignment with each other in the magazine (23) and movable towards the magazine outlet (38) under the action of a spring (41).

12. Device according to one of claims 9 to 11, **characterised in that** the magazine (23) and the feed device (24) form part of the attachment part (22) which can be attached to the drill (21), while the respective compression claw (10) can be fed by means of the feed device (24) into a feed plane of the clamping device (25) which is parallel to a drive axle (27a) connectable to the drill spindle (27).

13. Device according to claim 12, **characterised in that** the magazine (23) has a part (37) parallel to and at a distance from the feed plane, to which a reversing part (39) is attached, by which the compression claws (10) are fed to the magazine outlet (38) lying directly above the feed plane and are brought into the feed position.

14. Device according to claim 13, **characterised in that** the compression claw (10) located directly at the magazine outlet (38) is held by a magnet until the impact of the ram (34) and thus the other compression claws (10) are secured against falling out of the magazine (23).

15. Device according to any one of claims 9 to 14, **characterised in that** the magazine (23) has a guide channel (45) corresponding in cross-section to the external form of compression claws (10) and a retaining element (48) securing the compression claws (10) in the guide channel (45) against falling out.

16. Device according to claim 15, **characterised in that** the guide channel (45) has two side walls (46, 47) enclosing an angle (α), where the angle (α) corresponds to an apex angle of the compression claws (10) in the original state, and the retaining element (48) projects centrally between the side walls (46, 47) of the guide channel (45) and between hook-shaped ends (16, 17) of the compression claws (10).

## Revendications

1. Griffe de presse pour la liaison de grillages ou de treillis en fil métallique, qui a deux branches (12, 13) qui partent d'une base (11) arrondie et qui sont pourvues de respectivement un crochet (16, 17) à leur extrémité libre, les deux crochets étant dirigés en sens opposé et les branches (12, 13) étant dans deux plans faisant un angle (β) de manière à ce que les deux crochets (16,17) puissent, à la fermeture de la griffe de presse, passer l'un sur l'autre, **caractérisée en ce que**
le fil métallique anti-corrosion est un fil d'acier très résistant, les branches (12, 13) passant par leurs crochets (16, 17) avant de prendre la forme définitive, l'une sur l'autre en une position surcomprimée et les deux crochets (16, 17) sont l'un sur l'autre dans la forme définitive et forment respectivement un même rayon (R2) se recouvrant du côté intérieur du crochet et la griffe de presse peut être utilisée pour des grillages ou des treillis en fil métallique en acier très résistant pour sécuriser des talus ou pour des grillages de réception, pour des ouvrages contre les chutes de pierre ou les avalanches.

2. Griffe de presse suivant la revendication 1, **caractérisée en ce que** le diamètre 3 du fil métallique est de 3 mm et l'angle (α) d'ouverture du rayon (R₁) du côté intérieur de la base ainsi que du rayon (R₂) du côté intérieur des crochets sont choisis de manière à ce que respectivement deux fils métalliques des mailles à relier entre elles de grillages ou de treillis en fil métallique ayant un diamètre défini puissent être pris à la fermeture de la griffe (10) de presse.

3. Griffe de presse suivant la revendication 2, **caractérisée en ce que** le rayon (R₂) du côté intérieur des crochets est plus petit que les diamètres de fil métallique de la griffe de presse et, en outre, est inférieur ou égal au rayon du fil métallique des mailles à relier.

4. Griffe de presse suivant l'une des revendications 1 à 3, **caractérisée en ce que** les deux branches (12, 13) sont dans des plans faisant entre eux un angle d'environ 8°.

5. Griffe de presse suivant l'une des revendications 1 à 4, **caractérisée en ce que** le fil métallique utilisé est le même fil d'acier très résistant que pour les grillages ou les treillis en fil métallique à relier entre eux, sa résistance nominale étant d'au moins environ 1 770 N/mm².

6. Dispositif de fermeture de griffes (10) de presse pour des grillages ou des treillis en fil métallique suivant l'une des revendications 1 à 5, **caractérisé par**
un dispositif (25) de serrage ayant, pour la fermeture de diverses griffes (10) de presse, des éléments (30, 31) de serrage reliés fonctionnellement à un entraînement et dans lequel les griffes (10) de presse peuvent être mises en position individuellement avant la fermeture, le dispositif (25) de serrage étant associé à une partie (22) rapportée pouvant être mise sur une machine (21) à percer du commerce, au moins l'un des éléments (30, 31) de serrage pouvant être entraîné par la broche (27) de la machine à percer par l'intermédiaire d'un démultiplicateur (26), les éléments (30,31) de serrage étant formés par un mors (30) de serrage fixe, d'une part, et par un élément (31) d'entraînement monté pivotant, d'autre part, l'élément (31) d'entraînement étant pourvu d'un segment (50) denté, et pouvant par celui-ci, en coopération avec un contre-segment (51) denté pouvant être entraîné par le démulplicateur (26), pivoter dans un sens (D₁) de rotation provoquant la fermeture de la griffe (10) de presse mise en position dans le dispositif (25) de serrage, et dans lequel, par la coopération des deux segments (50, 51) dentés, les deux branches (12, 13) de la griffe (10) de presse passent par leurs crochets (16, 17), l'une sur l'autre, et sont surcomprimés jusque dans une position.

7. Dispositif suivant la revendication 6, **caractérisé en ce que** l'élément (31) d'entraînement peut, après la fin de l'engrenage des deux segments (50, 51) dentés, revenir, par l'élasticité de la griffe (10) de presse assistée par un ressort supplémentaire, dans une position initiale.

8. Dispositif suivant la revendication 6 ou 7, **caractérisé en ce que** la griffe (10) de presse respective -entourant par son côté intérieur de base un tourillon (53) coaxial à l'axe (A) de pivotement de l'élément (31) d'entraînement- peut être mise en position par application sur un aimant (54) annulaire coaxial au tourillon (53) d'une part, et, d'autre part, sur un autre aimant (56) associé au mors (30) de serrage fixe.

9. Dispositif suivant l'une des revendications 6 à 8, **caractérisé par** un magasin pour un certain nombre de griffes (10) de presse qui, au moyen d'un dispositif (24) d'envoi, peuvent être envoyées individuellement du magasin (23) au dispositif (25) de serrage.

10. Dispositif suivant la revendication 9, **caractérisé en ce que** le dispositif (24) d'envoi a un poussoir (34) pouvant être actionné manuellement, coopérant avec un ressort (35) et entraînant la griffe (10) de presse respective à une sortie (38) du magasin.

11. Dispositif suivant la revendication 10, **caractérisé en ce que** les griffes (10) de presse sont disposées en étant rangées les unes à côté des autres dans le magasin (23) et peuvent être déplacées vers la sortie (38) du magasin sous l'action d'un ressort (41).

12. Dispositif suivant l'une des revendications 9 à 11, **caractérisé en ce que** le magasin (23) ainsi que le dispositif (24) d'envoi font partie de la pièce (22) rapportée pouvant être mise sur la machine (21) à percer, la griffe (10) de presse respective pouvant, au moyen du dispositif (24) d'envoi, être envoyée dans un plan d'envoi du dispositif (25) de serrage, qui est parallèle à un axe (27a) d'entraînement pouvant être relié à la broche (27) de la machine à percer.

13. Dispositif suivant la revendication 12, **caractérisé en ce que** le magasin (23) a une partie (37) parallèle au plan d'envoi et à distance de celui-ci, à laquelle se raccorde une partie (39) de renvoi par laquelle les griffes (10) de presse sont guidées vers la sortie (38) du magasin se trouvant directement au-dessus du plan d'envoi et mises dans la position d'envoi.

14. Dispositif suivant la revendication 13, **caractérisé en ce que** les griffes (10) de presse se trouvant juste à la sortie (38) du magasin sont, jusqu'à l'application du poussoir (34), maintenues par un aimant, et ainsi les autres griffes (10) de presse sont empêchées de tomber du magasin (23).

15. Dispositif suivant l'une des revendications 9 à 14, **caractérisé en ce que** le magasin (23) a un canal (45) de guidage correspondant en section transversale à la forme extérieure de griffes (10) de presse, ainsi qu'une partie (48) de maintien empêchant les griffes (10) de presse dans le canal (45) de guidage de tomber.

16. Dispositif suivant la revendication 15, **caractérisé en ce que** le canal (45) de guidage a deux parois (46, 47) latérales faisant un angle (α), l'angle (α) correspondant à un angle d'ouverture des griffes (10) de presse à l'état d'origine et la partie (48) de maintien pénètre centralement entre les parois (46, 47) latérales du canal (45) de guidage et entre des extrémités (16, 17) en forme de crochet des griffes (10) de presse.
